Europäisches Patentamt

European Patent Office

Office européen des brevets

(11) Publication number: **0 379 364 A2**

## EUROPEAN PATENT APPLICATION

(21) Application number: 90300517.1

(51) Int. Cl.5: **F16H 55/06**

(22) Date of filing: **18.01.90**

(30) Priority: **18.01.89 US 298053**

(43) Date of publication of application:
**25.07.90 Bulletin 90/30**

(84) Designated Contracting States:
**AT BE CH DE DK ES FR GB GR IT LI LU NL SE**

(71) Applicant: **LITENS AUTOMOTIVE INC**
**36 Apple Creek Boulevard**
**Markham Ontario L3R 4Y4(CA)**

Applicant: **TESMA HOLDINGS INC.**
**36 Apple Creek Boulevard**
**Markham Ontario L3R 4Y4(CA)**

Applicant: **730143 ONTARIO INC**
**730 Rowntree Dairy Road**
**Woodbridge, Ontario L4L 5T9(CA)**

Applicant: **730144 ONTARIO INC**
**730 Rowntree Dairy Road**
**Woodbridge, Ontario L4L 5T9(CA)**

(72) Inventor: **Bytzek, Klaus Kurt,**
**Rural Route 3**
**Schomberg, Ontario L0G 1TO(CA)**

(74) Representative: **Laight, Martin Harvey et al**
**W H Beck, Greener & Company 7 Stone**
**Buildings Lincoln's Inn**
**London WC2A 3SZ(GB)**

(54) **Toothed wheel and method of making same.**

(57) A toothed wheel suitable for automotive vehicle use comprising a generally circular sheet metal body (12) having an outer, free, end marginal section (18) thereof, annularly bent so as to initially provide: a first, tooth-end defining, annular wall-portion (20) having a generally radially-outward extent; a middle, tooth-body defining, annular wall-portion (22) having a generally axial extent; and a second, tooth-end defining, annular wall-portion (24), having a generally radially-inward extent. The tooth-defining, annular wall-portions (20, 22, 24) have a series of annularly spaced, radially-inwardly extending depressions formed therein by metal movement, so as to finally define therebetween a series of regularly occurring teeth, presenting continuous exterior trough surfaces (36), sidewall surfaces (38), crest surfaces (40), and first and second closed end surfaces (42 and 44). The trough, sidewall, and crest surfaces (36, 38, 40) of the teeth are defined by the sheet metal of the middle, tooth-body defining, wall-portion (22), and the first and second closed end surfaces (42 and 44) of the teeth are defined by the sheet metal of the first and second, tooth-end defining, wall-portions (20 and 24).

Fig.3. Fig.4.

## TOOTHED WHEEL AND METHOD OF MAKING SAME

This invention relates to toothed wheels, and to a method of, and blanks for, making same, and more particularly to toothed wheels suitable for automotive vehicle use.

The invention has particular applicability to the relatively larger gears that are utilized in automotive vehicles, a prime example being a starter gear. For use in automotive vehicles, a toothed wheel, such as a starter gear, must be capable of being mass produced on a cost effective basis. Other toothed wheels which are contemplated include timing belt pulleys, transmission gears, sprocket wheels (motorcycles), etc.

Most current production starter gears utilized in automotive vehicles in the United States are made by gear cutting techniques. A majority are cut from welded assemblies, although some are simply cut from a single circular cast iron plate. It has long been recognized that it is inherently more cost effective, particularly where material costs are appreciable, to produce metal products by moving the starting metal into the final shape, especially by cold forming, rather than by cutting or removing metal from the starting metal.

Many efforts have been made in the past to form starter gears and other similar toothed wheels (e.g. timing belt pulleys) utilized in automotive vehicles from circular sheet metal blanks in such a way that the teeth are formed by metal movement rather than cutting.

U. S. Patent No. 2,654,944 illustrates an early proposal in this regard. In this patent, the circular blank has its outer marginal portion formed into an axially extending flange. The flanged blank is then placed in a die and a die plunger is moved axially into engagement with the free edge of the flange so as to compress the same axially while allowing the metal to flow radially outwardly into the die to form teeth. The operation is a hot forming operation.

U. S. Patent No. 3,745,851 discloses the utilization of a circular sheet metal blank and contacting the periphery of the blank with tools so as to completely cold form teeth therein. In the finished gear, the marginal outline of the teeth extends outwardly from opposite surfaces of the blank.

U. S. Patent No. 3,796,085 discloses the utilization of a circular sheet metal blank in which an axial flange is initially formed along its outer periphery and the axial flange is then formed into a toothed configuration.

U. S. Patent No. 4,131,032 discloses a composite toothed wheel which includes a gear similar to that disclosed in Patent No. 3,796,085 with the addition of a reinforcing plate between the free end of the toothed flange and the hub structure of the wheel. As far as applicant is aware, none of the proposed constructions disclosed in the above four United States patents have received any significant usage in the United States automotive industry.

German Patent No. DE 3,712,123 discloses a wheel constructed of a blank having an axial flange which is formed with a specific toothed configuration which has been utilized recently in the European automotive market. The arrangement is similar to all of the cold formed toothed flanges described above in that the teeth are formed with continuous crest, trough and sidewall exterior surfaces but with at least one end of each tooth open.

The sinusoidal configuration of the open free end of the toothed flange contributes to the strength of the construction but also presents the area of the toothed wheel where metal failure is most likely to occur. The construction thus presents a situation where increased strength is provided by increasing the thickness of the circular sheet metal blank which forms the starting material. Increases in sheet metal thickness can significantly increase costs. Consequently, from a standpoint of cost effectiveness, there exists a need to economically form a toothed configuration which has comparable strength and operative performance while utilizing a starting sheet metal body of a reduced thickness.

It is an object of the present invention to fulfill the above need to provide a more cost effective toothed wheel suitable for automotive vehicle use. In accordance with the principles of the present invention, this objective is obtained by providing a toothed wheel suitable for automotive vehicle use which comprises a generally circular sheet metal body having an outer free end marginal section thereof annularly bent so as to initially provide (1) a first tooth end defining annular wall portion having a generally radially outward extent, (2) a middle tooth body defining annular wall portion having a generally axial extent and (3) a second tooth end defining annular wall portion having a generally radially inward extent. The tooth defining annular wall portions have a series of annularly spaced radially inwardly extending depressions formed therein by metal movement so as to finally define therebetween a series of regularly occurring teeth presenting continuous exterior trough, sidewall, crest and first and second closed end surfaces. The trough, sidewall, and crest surfaces of the teeth are defined by the sheet metal of the middle tooth body defining wall portion and the first and second closed end surfaces of teeth are defined by the sheet metal of the first and second tooth end defining wall portions.

By closing the teeth ends which heretofore were open, the minimum strength characteristics of the toothed structure can be increased in a manner which does not require an increase in the thickness of the starting circular sheet metal body. By closing the open ends of the teeth, a structure which heretofore was significantly non-uniform in strength is made more uniform. Where minimum strength is determined by the thickness of the starting circular sheet metal body and strength non-uniformity exists, it has been noted that the requirement to provide sufficient thickness for the strength necessary for the weakest area of non-uniformity results in providing excess strength in the remaining areas of non-uniformity. Indeed, it has been found that by providing greater strength uniformity, sufficient overall strength can be provided utilizing a starting circular sheet metal body of less thickness than heretofore required. In automotive usage, such as herein contemplated, even material savings of as little as 10% can greatly enhance the cost effectiveness of the tooth being mass produced.

Another object of the present invention is to provide a toothed wheel suitable for automotive vehicle use which is simple in construction, effective in operation and economical to manufacture.

There is also provided in accordance with the invention, in another aspect, a toothed wheel comprising a substantially circular sheet metal body having a peripheral portion thereof forming teeth, characterised in that the peripheral portion is bent so as to provide a first, annular wall portion having an extent in a generally radially outward direction, a middle, annular, wall portion having an extent in a generally axial direction, and a second, annular, wall portion having an extent in a generally radially inward direction, the said annular wall portions having a series of annularly spaced, radially inwardly extending, depressions formed therein so as to define therebetween a series of regularly occuring teeth, the teeth presenting continuous exterior trough surfaces, sidewalls surfaces, and crest surfaces, and first and second closed end surfaces, the trough, sidewall, and crest surfaces of the teeth being defined by the sheet metal of the said middle wall portion, and the first and second, closed end surfaces of the teeth being defined by the sheet metal of the said first and second wall portions.

It is to be appreciated that features of the invention which have been set out hereinbefore, and hereinafter, in relation to a toothed wheel, are also provided in relation to a method of making a toothed wheel, and a blank for making a toothed wheel.

In particular, there may also be provided in accordance with the invention a method of forming a toothed wheel comprising forming teeth on a peripheral portion of a substantially circular, sheet metal body, characterised by bending the peripheral portion so as to provide a first, annular, wall portion having an extent in a generally radially outward direction, a middle, annular, wall portion having an extent in a generally axial direction, and a second, annular, wall portion having an extent in a generally radially inward direction, forming in the said annular wall portions by metal movement a series of annularly spaced, radially inwardly extending, depressions so as to define therebetween a series of regularly occuring teeth.

Furthermore, there may be provided in accordance with the present invention a blank for producing a toothed wheel comprising a substantially circular, sheet metal body having a peripheral portion thereof for forming teeth, characterised in that the peripheral portion is bent so as to provide a first, annular, wall portion having an extent in a generally radially outward direction, a middle, annular, wall portion having an extent in a generally axial direction, and a second, annular, wall portion having an extent in a generally radially inward direction.

These and other objects of the present invention will become more apparent during the course of the following detailed description and appended claims.

The invention may best be understood with reference to the accompanying drawings wherein an illustrative embodiment is shown.

IN THE DRAWINGS:

Figure 1 is a fragmentary side elevational view of a circular sheet metal body having an outer free edge marginal section thereof annularly bent into a preferred initial configuration in accordance with the principles of the present invention;

Figure 2 is a sectional view taken along the line 2-2 of Figure 1;

Figure 3 is a fragmentary view similar to Figure 1 illustrating a preferred final configuration providing a series of exterior teeth on the sheet metal body;

Figure 4 is a fragmentary sectional view taken along the line 4-4 of Figure 3;

Figure 5 is a fragmentary sectional view taken along the line 5-5 of Figure 3;

Figures 6, 7, and 8 are views similar to Figures 2, 3, and 4 showing another embodiment of the present invention;

Figures 9, 10, and 11 are views similar to Figures 2, 3, and 4 showing another embodiment of the present invention;

Figures 12, 13, and 14 are views similar to Figures 2, 3, and 4 showing another embodiment of the present invention;

Figures 15, 16, and 17 are views similar to Figures 2, 3, and 4 showing another embodiment of the present invention;

Figures 18, 19, and 20 are views similar to Figures 2, 3, and 4 showing another embodiment of the present invention;

Figures 21, 22, and 23 are views similar to Figures 2, 3, and 4 showing another embodiment of the present invention;

Figures 24, 25, and 26 are views similar to Figures 2, 3, and 4 showing another embodiment of the present invention; and

Figures 27, 28, and 29 are views similar to Figures 2, 3, and 4 showing another embodiment of the present invention.

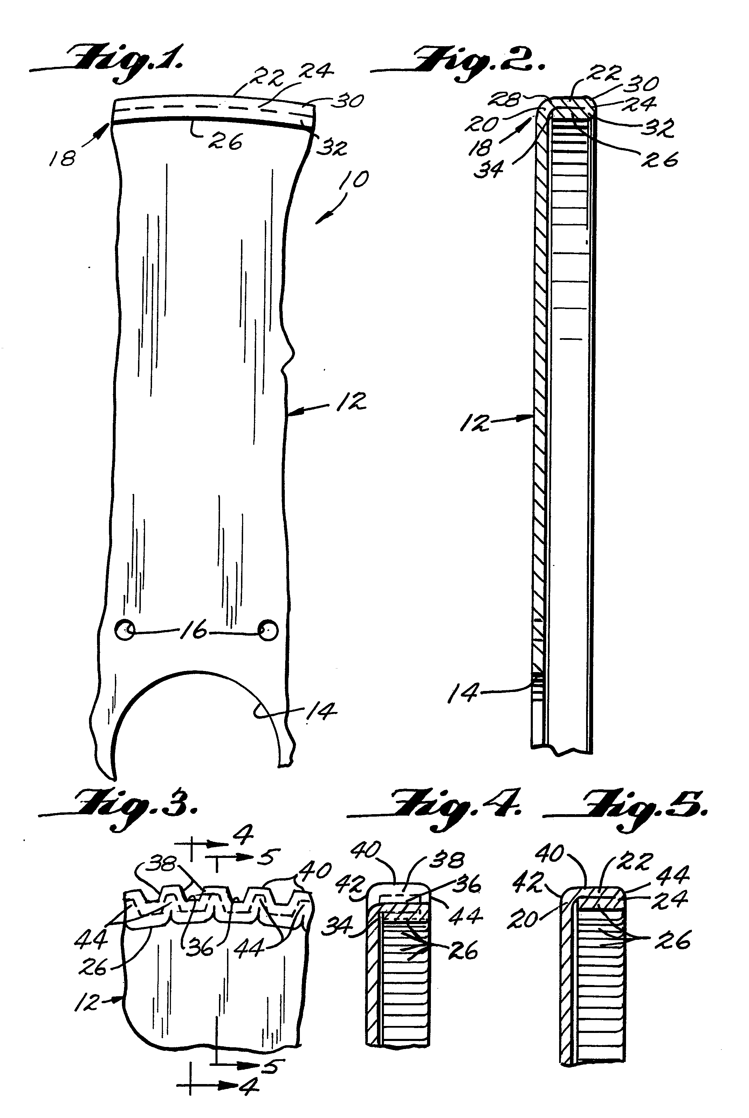

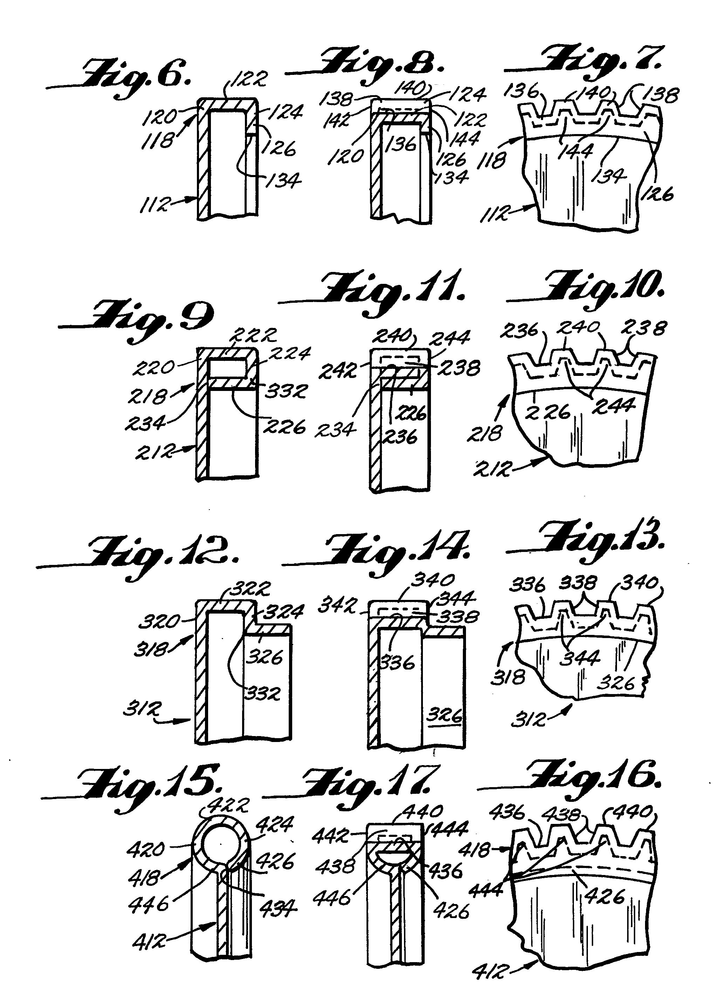

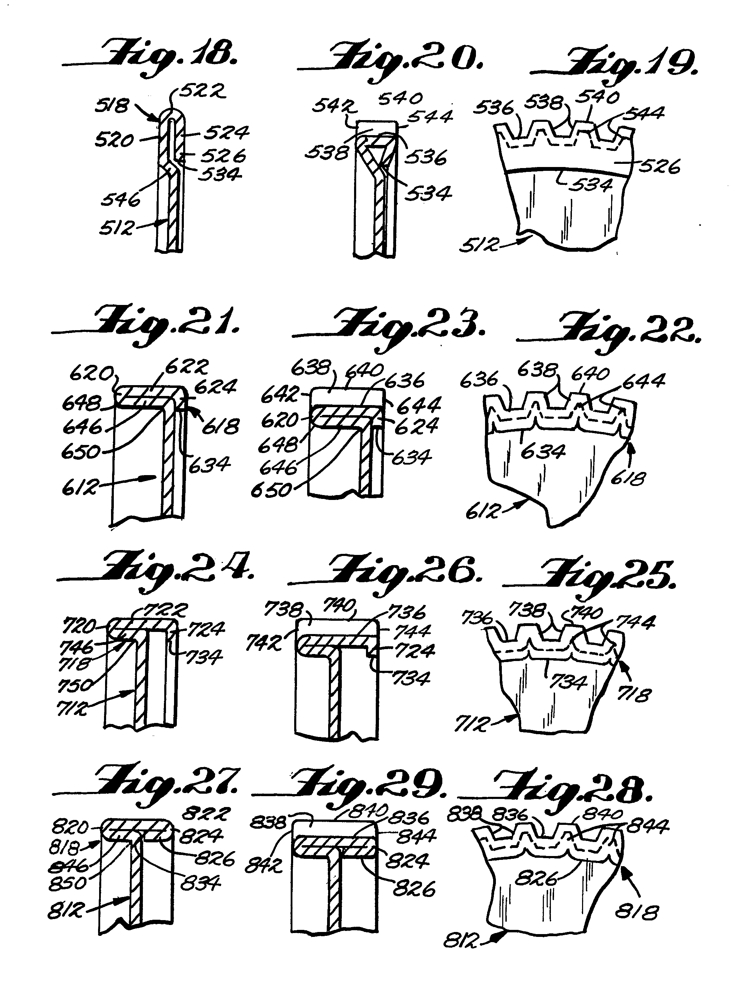

Referring now more particularly to Figures 1-5 of the drawings, there is shown therein a preferred embodiment of a starter gear of the type suitable for automotive use, generally indicated at 10, which embodies the principles of the present invention. As shown, the toothed wheel in the form of a starter gear comprises essentially a circular sheet metal body, generally indicated at 12. As shown, the body 12 includes a central opening 14 with a series of openings 16 spaced annularly thereabout for the purpose of enabling the central portion of the sheet metal body to be connected with a suitable hub structure of any known construction. The hub structure is not shown and forms no part of the present invention which is particularly concerned with an outer peripheral tooth structure, generally indicated at 18, which is formed along the outer periphery of the circular sheet metal body 12. As best shown in Figures 1 and 2, the circular sheet metal body is initially provided in a planar condition and an outer free end marginal section thereof corresponding with the metal forming the peripheral tooth structure 18 is annularly bent so as to initially provide a first tooth end defining annular wall portion 20 having a generally radially outward extent, a middle tooth body defining annular wall portion 22 having a generally axially extent and a second tooth end defining annular wall portion 24 having a generally radially inward extent. In the preferred embodiment, the outer free marginal section 18 is also annularly bent so as to initially provide a free end annular wall portion 26 having a generally axial extent. In the embodiment shown, the first tooth end defining annular wall portion 20 is coplanar with the remainder of the circular sheet metal body 12. The middle tooth body defining annular wall portion 22 is of generally cylindrical configuration and is joined at its ends with the first and second tooth end defining annular wall portions 20 and 24 by angular bends 28 and 30. The free end annular wall portion 26, as shown in the preferred embodiment, is also of generally cylindrical configuration and is joined at one end with the second tooth end defining wall portion 24 by an angular bend 32. It will be noted that the free end annular wall portion 26 terminates in a free edge 34 which is disposed adjacent the first tooth end defining annular wall portion 20. It will also be noted that, in the preferred configuration shown in Figures 1 and 2, the free end annular wall portion 26 is generally coextensive with the middle tooth body defining annular wall portion 22 and is disposed in substantially abutting relation therewith.

It will be understood that any well known machine and procedure may be utilized for effecting the annular bending of the free end marginal section 18 to provide the various portions 20, 22, 24, and 26 and the angular bends 28, 30, and 32 which interconnect the same. For example, the annular bending can be accomplished in conventional spinning or rolling machines.

After the circular sheet metal body 12 has been annularly bent in the manner shown in Figures 1 and 2 and described above, the tooth defining annular wall portions 20, 22, and 24 have a series of annularly spaced radially inwardly extending depressions formed therein by metal movement so as to finally define therebetween a series of regularly occurring teeth presenting continuous exterior trough surfaces 36, sidewall surface 38, crest surfaces 40, first closed end surfaces 42, and second closed end surfaces 44. Here again, machines capable of forming the depressions are known. Preferably, a machine of the type which delivers successive hammerlike blows to progressively form the depressions is preferred.

It will be noted that the trough, sidewall, and crest surfaces 36, 38, and 40 of the teeth are defined by the sheet metal of the middle tooth body defining annular wall portion 22 whereas the first and second closed end surfaces 42 and 44 of the teeth are defined by the sheet metal of the first and second tooth end defining annular wall portions 20 and 24 respectively. With the teeth being formed in essentially three-dimensional configuration at each end, a significant strength and uniformity of strength is provided in the tooth structure 18. In the preferred embodiment, the free end annular wall portion 26 provides added strength for the tooth structure 18 and does so without forming significant areas where dirt and mud could collect within the unit. An exemplary thickness of the starting circular sheet metal body 12 is 2.5 mm as compared with a thickness of 3 mm utilized in the commercialized units of the type disclosed in the aforesaid German patent.

Figures 6-29 illustrate various different configurations into which the outer free end marginal section 18 can be initially annularly bent and then

4

formed with radially inward depressions defining the teeth. Each set of three consecutive figures illustrates a modification or different embodiment in which corresponding parts are designated by reference numerals corresponding to those used in describing the preferred embodiment of Figures 1-5 utilizing a prefix number for the eight sequential sets of Figures starting with 1 and extending to 8.

The construction shown in Figures 6-8 includes a circular sheet metal body 110 having an outer free end marginal section 118 annularly bent to provide a first tooth end defining annular wall portion 120 which, like the corresponding wall portion 20 of the preferred embodiment, is generally coplanar with the remainder of the circular sheet metal body 112. The first tooth end defining annular wall portion 120 is integrally joined, as by an angular bend 128 with a middle generally cylindrically shaped tooth body defining annular wall portion 122 which, in turn, is inwardly connected, as by an angular bend 130 with a second tooth end defining annular wall portion 124 which, as before, is generally parallel with the first tooth end defining annular wall portion 120. As shown, the second tooth end defining annular wall portion 124 extends radially inwardly a distance greater than the radially inward extent of the corresponding wall portion 24 of the preferred embodiment and is shown as being greater than the radially inward extent of the depressions which are subsequently formed in the tooth defining portions 120, 122, and 124 to define the series of teeth. This radially inward extension of the second tooth end defining annular wall portion 124 can be considered a free end annular wall portion 126 which extends radially inwardly and terminates in a free edge 134. As before, the teeth defined by the formed depressions have corresponding trough, sidewall, crest, and first and second closed end surfaces 136, 138, 140, 142, and 144 respectively. The arrangement uses less metal than the preferred embodiment while still providing the teeth with three dimensional constructions at each end. A disadvantage of this embodiment is the interior of the tooth structure is open to receive debris.

Figures 9-11 show still another modification within the contemplation of the present invention. In essence, the Figures 9-11 embodiment provides all of the wall portions that are provided in the first embodiment except that the second tooth end defining annular wall portion 224 is elongated when compared with the second tooth end defining annular wall portion 24 of the preferred embodiment. Consequently, as initially provided, the axially extending free end annular wall portion 226 is disposed in spaced relation with respect to the middle tooth body defining annular wall portion 222.

Figures 12-14 illustrate still another modification which is similar to both the preferred embodiment of Figures 1-5 and the embodiment of Figures 9-11. As shown in Figures 12-14, the free end annular wall portion 326 is still of cylindrical configuration but extends axially from the second tooth end defining annular wall portion 324 in a direction opposite from the direction in which the middle tooth body defining annular wall portion 322 extends. The embodiment of Figures 12-14 thus provides an axially outwardly extending flange 326 which provides a mounting function in certain installations.

In all of the embodiments thus far described, the three tooth defining annular portions are preferably initially configured in a shape which requires only a radially inward movement of metal to form the depressions and resulting teeth. Figures 15-17 illustrate a configuration in which the annular bend of the outer free end marginal section 418 may also be extended to an adjacent annular section thereof which is annularly bent to provide an inner annular wall portion 446. Figure 15 also illustrates that the tooth defining annular wall portions 420, 422, and 424 need not have a straight extent in their general direction of extent. Thus, in the arrangement shown in Figure 15, the inner annular wall portion 446 has a generally axially extent but the extent is along an arc. Similarly, the first tooth end defining annular wall portion 420 is likewise of arcuate configuration but has a generally radially outward extent. Similarly, the middle tooth body defining annular wall portion 422 is of arcuate configuration but also has a generally axial extent. Moreover, the second tooth end defining annular wall portion 424 has a generally radially inward extent but is of arcuate configuration. Finally, it will be noted that the free end annular wall portion 426 has a generally axial extent but is likewise of arcuate configuration. As shown in Figure 15, all of the wall portions provide a smooth rounded transition from one portion to the next so that the entire initial annularly bent sections of the circular sheet metal body 412 form a loop configuration. Figures 16 and 17 disclose that, when the depressions are formed radially inwardly with respect to the loop configuration, the generally arcuate configuration of the middle tooth body defining annular wall portion 422 is changed into an axially straight configuration in which the trough, sidewalls, and crest surfaces 436, 438, and 440 are of the same configuration as provided by the initial configuration of the preferred embodiment. Here, again, it will be noted that the completed tooth structure 418 provides closed ends which provides the aforesaid desirable strength characteristics.

Figures 18-20 show what is essentially a variation of the circular looped configuration of Figure 15. The initial arrangement is essentially an axially flattened loop in which the inner annular wall portion 546 is of angular configuration, and the middle tooth body defining annular wall portion 522 is of inverted U-shaped configuration. Here again, the middle tooth body defining annular wall portion 522 tends to straighten out during the formation of the depressions so that the profile of the teeth is straight across although of less width than in the other embodiments.

The embodiment of Figures 21-23 illustrates an initial construction in which the second tooth end defining annular wall portion 624 terminates in a free edge and no additional free end annular portion, as such, is provided. In the arrangement, the inner annular wall portion 646 is of generally cylindrical configuration and is jointed with the first tooth end defining annular wall portion 620 by an angular bend 648 and with the remainder of the circular sheet metal body 612 by an angular bend 650. The inner annular wall portion 646 is generally coextensive with the middle tooth body defining annular wall portion 622 and is disposed in generally abutting relation thereto with the angular bend 650 being disposed in adjacent abutting relation with the second tooth end defining annular wall portion 624.

The embodiments of Figures 24-26 is similar to that of Figures 21-23 except that the inner annular wall portion 746 has an axial extent only half of that of the middle tooth body defining annular wall portion 722. Angular bend 750 is generally equally spaced between the first and second end defining annular wall portions 720 and 724 respectively. An arrangement of this type is particularly useful in timing belt pulley applications where belt forces are transmitted radially inwardly.

The embodiment of Figures 27-29 shows modification of the construction illustrated in Figures 24-26 wherein a cylindrically shaped free end annular wall portion 826 is joined with the second tooth end defining annular wall portion 824 by an angular bend 832.

It thus will be seen that the objects of this invention have been fully and effectively accomplished. It will be realized, however, that the foregoing preferred specific embodiments have been shown and described for the purpose of this invention and are subject to change without departure from such principles. Therefore, this invention includes all modifications encompassed within the spirit and scope of the following claims.

## Claims

1. A toothed wheel suitable for automotive vehicle use comprising
a generally circular sheet metal body having an outer free end marginal section thereof annularly bent so as to initially provide (1) a first tooth end defining annular wall portion having a generally radially outward extent, (2) a middle tooth body defining annular wall portion having a generally axial extent and (3) a second tooth end defining annular wall portion having a generally radially inward extent,
said tooth defining annular wall portions having a series of annularly spaced radially inwardly extending depressions formed therein by metal movement so as to finally define therebetween a series of regularly occurring teeth presenting continuous exterior trough, side wall, crest and first and second closed end surfaces,
the trough, sidewall, and crest surfaces of said teeth being defined by the sheet metal of said middle tooth body defining wall portion,
the first and second closed end surfaces of said teeth being defined by the sheet metal of said first and second tooth end defining wall portions.

2. A device as defined in claim 1 wherein said annular section is further annularly bent to initially provide (4) a free end annular wall portion having a generally axial extent.

3. A device as defined in claim 2 wherein said middle tooth body defining annular wall portion is initially of generally cylindrical configuration joined at its ends with said first and second tooth end defining annular wall portions by angular bends.

4. A device as defined in claim 3 wherein said free end annular wall portion is initially of generally cylindrical configuration joined with said second tooth end defining annular wall portion by an angular bend.

5. A device as defined in claim 4 wherein said free end annular wall portion initially extends axially from the angular bend juncture thereof with said second tooth end defining annular wall portion in a direction opposite from the direction of initial axial extent of said middle tooth body defining annular wall portion from the angular bend juncture thereof with said second tooth end defining annular wall portion.

6. A device as defined in claim 4 wherein said free end annular wall portion initially extends axially from the angular bend juncture thereof with said second tooth end defining annular wall portion in a direction the same as the direction of initial axial extent of said middle tooth body defining annular wall portion from the angular bend juncture thereof with said second tooth end defining annular wall portion.

7. A device as defined in claim 6 wherein said middle tooth body defining annular wall portion is initially disposed in spaced substantial coextensive relation with respect to from said free end annular wall portion.

8. A device as defined in claim 6 wherein said middle tooth body defining annular wall portion is initially disposed in substantial coextensive relation and in substantial abutting relation to said free end annular wall portion.

9. A device as defined in claim 2 wherein an inner annular section of said sheet metal body adjacent said free end marginal section is annularly bent to initially provide an inner annular wall portion having a generally axial extent.

10. A device as defined in claim 9 wherein said inner annular wall portion is initially of generally cylindrical configuration joined at its ends with said first tooth end defining annular wall portion and with said sheet metal body by angular bends.

11. A device as defined in claim 10 wherein the angular bend juncture between said inner annular wall portion and said sheet metal body is spaced generally equally from each tooth end defining annular wall portion.

12. A device as defined in claim 9 wherein said inner annular wall portion, said first tooth end defining annular wall portion, said middle tooth body defining annular wall portion, said second tooth end defining annular wall portion and said free end annular wall portion are initially in a smoothly rounded loop configuration.

13. A device as defined in claim 9 wherein said inner annular wall portion, said first tooth end defining annular wall portion, said middle tooth body defining annular wall portion, said second tooth end defining annular wall portion and said free end annular wall portion are initially in a radially flattened loop configuration.

14. A device as defined in claim 1 wherein said first tooth end defining annular wall portion, said middle tooth body defining annular wall portion, and said second tooth end defining annular wall portion are initially in an axially flattened loop configuration.

15. A device as defined in claim 1 wherein said middle tooth body defining annular wall portion is initially of generally cylindrical configuration joined at its ends with said first and second tooth end defining annular wall portions by angular bends.

16. A device as defined in claim 15 wherein said first tooth end defining annular wall portion is initially coplanar with an annular section of said sheet metal body adjacent said free end marginal section thereof.

17. A device as defined in claim 16 wherein said second tooth end defining annular wall portion terminates in a free edge.

18. A device as defined in claim 15 wherein an inner annular section of said sheet metal body adjacent said free end marginal section is annularly bent to initially provide an inner annular wall portion having a generally axial extent, said inner annular wall portion is initially of generally cylindrical configuration joined at its ends with said first tooth end defining annular wall portion and with said sheet metal body by angular bends, said first tooth end defining annular wall portion is initially coplanar with an annular section of said sheet metal body adjacent said free end marginal section thereof.

19. A device as defined in claim 18 wherein the angular bend juncture between said inner annular wall portion and said sheet metal body is spaced generally equally from each tooth end defining annular wall portion.

20. A device as defined in claim 18 wherein the angular bend juncture between said inner annular wall portion and said sheet metal body is disposed adjacent said second tooth end defining annular wall portion.

21. A toothed wheel comprising a substantially circular sheet metal body (12) having a peripheral portion (18) thereof forming teeth, characterised in that the peripheral portion (18) is bent so as to provide a first, annular wall portion (20) having an extent in a generally radially outward direction, a middle, annular, wall portion (22) having an extent in a generally axial direction, and a second, annular, wall portion (24) having an extent in a generally radially inward direction, the said annular wall portions (20, 22 and 24) having a series of annularly spaced, radially inwardly extending, depressions formed therein so as to define therebetween a series of regularly occuring teeth, the teeth presenting continuous exterior trough surfaces (36), sidewall surfaces (38), and crest surfaces (40), and first and second closed end surfaces (42 and 44), the trough, sidewall, and crest surfaces (36, 38 and 40) of the teeth being defined by the sheet metal of the said middle wall portion (22), and the first and second, closed end surfaces (42 and 44) of the teeth being defined by the sheet metal of the said first and second wall portions (20 and 24).

22. A method of forming a toothed wheel comprising forming teeth on a peripheral portion (18) of a substantially circular, sheet metal body (12), characterised by bending the peripheral portion (18) so as to provide a first, annular, wall portion (20) having an extent in a generally radially outward direction, a middle, annular, wall portion (22) having an extent in a generally axial direction, and a second, annular, wall portion (24) having an extent in a generally radially inward direction, forming in the said annular wall portions (20, 22 and 24) by metal movement a series of annularly spaced, radially inwardly extending, depressions so as to define therebetween a series of regularly occuring teeth.

23. A blank for producing a toothed wheel comprising a substantially circular, sheet metal body (12) having a peripheral portion (18) thereof for forming teeth,

characterised in that the peripheral portion (18) is bent so as to provide a first, annular, wall portion (20) having an extent in a generally radially outward direction, a middle, annular, wall portion (22) having an extent in a generally axial direction, and a second, annular, wall portion (24) having an extent in a generally radially inward direction.

Fig.1.

Fig.2.

Fig.3.

Fig.4.

Fig.5.

Fig.6.

Fig.8.

Fig.7.

Fig.9

Fig.11.

Fig.10.

Fig.12.

Fig.14.

Fig.13.

Fig.15.

Fig.17.

Fig.16.

Fig.18. Fig.20. Fig.19. Fig.21. Fig.23. Fig.22. Fig.24. Fig.26. Fig.25. Fig.27. Fig.29. Fig.28.